# EUROPEAN PATENT SPECIFICATION

(11) **EP 0 883 267 B1**
(45) Date of publication and mention of the grant of the patent: **26.10.2005**
(21) Application number: 98107365.3
(22) Date of filing: 22.04.1998
(51) Int. Cl.: H04L 25/02

(54) **Line driver**
Leitungstreiber
Circuit d'attaque de lignes

(30) Priority: 05.06.1997 JP 14825497
(43) Date of publication of application: 09.12.1998
(73) Proprietor: HONDA GIKEN KOGYO KABUSHIKI KAISHA, Minato-ku, Tokyo (JP)
(72) Inventor: Ohuchi, Katsuhiro, 1-4-1 Chuo, Wako-shi, Saitama-ken (JP); Sato, Morio, 1-4-1 Chuo, Wako-shi, Saitama-ken (JP)
(74) Representative: Liska, Horst

(56) References cited:
- DE-A- 19 829 214
- US-A- 5 164 617
- US-A- 5 436 577

## Description

The present invention relates to a transmitting apparatus for outputting a signal of binary levels over a communication line or the like.

In Japanese Patent Laid-open No. Hei 5-292101, there is proposed a communication apparatus in which signals are exchanged among a plurality of communication units through a communication line, each communication unit comprising a transmitting circuit for generating a high-level signal or a low-level signal in an alternative way and outputting the generated signal to the communication line and a transmission control circuit for inputting a control signal to the transmitting circuit so that the transmitting circuit outputs the high-level signal or the low-level signal. US 516 4617 also describes a circuit for outputting a high - level or low-level signal.

In this document, there is proposed the communication apparatus adapted to reduce the effect of the stray capacitance between the communication line and ground, which slows down the communication, and hence to make fast communication by making up the transmitting circuit of a timing circuit for outputting a timing signal for a predetermined period of time after inversion of the level of the control signal from a first level to a second level, a first transistor responsive to the timing signal for outputting either of the high level and low level, and a second transistor responsive to the inversion of the level of the control signal from the second level to the first level for outputting a signal at the other level to the communication line.

There is also known a transmitting apparatus of the so-called totem pole type in which a first transistor for outputting a high-level signal to a communication line and a second transistor for outputting a low-level signal to the communication line are connected in series and interposed between power source terminals.

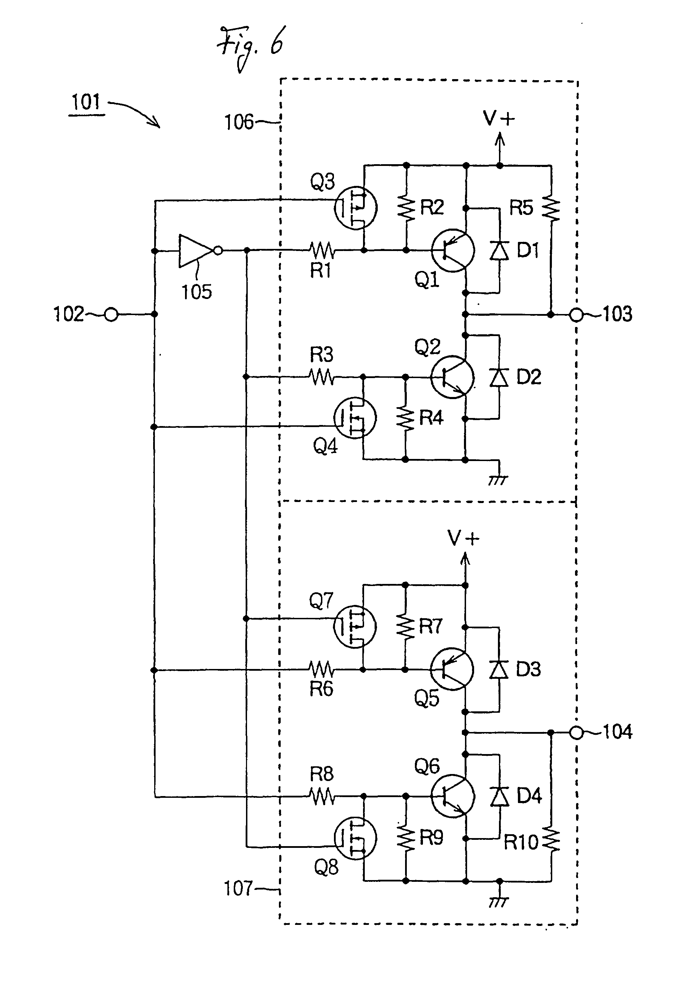

FIG. 6 is a circuit configuration diagram showing an example of a prior art totem pole type transmitting apparatus.

FIG. 6 shows a transmitting apparatus 101 including a noninverting signal output terminal 103 for outputting a signal at the same logical level as the logical level of transmitted data supplied to the data input terminal 102 and an inverting signal output terminal 104 for outputting a signal at the logical level obtained by reversing the logical level of the transmitted data supplied to the data input terminal 102.

The prior art transmitting apparatus 101 shown in FIG. 6 comprises an inverter (logically inverting circuit) 105 for inverting the logical level of transmitted data supplied to the data input terminal 102 and two sets of output circuits 106 and 107.

One output circuit 106 comprises a PNP transistor Q1, an NPN transistor Q2, a P-channel enhancement field effect transistor Q3, an N-channel enhancement field effect transistor Q4, and their peripheral circuits.

The emitter of the PNP transistor Q1 is connected to a positive power source V+ and the collector of the PNP transistor Q1 is connected to the noninverting output terminal 103.

The base of the PNP transistor Q1 is connected to the output terminal of the inverter 105 through a base resistor R1.

The emitter of the NPN transistor Q2 is connected to ground (or a negative power source) and the collector of the NPN transistor Q2 is connected to the noninverting output terminal 103.

The base of the NPN transistor Q2 is connected to the output terminal of the inverter 105 through a base resistor R3.

The noninverting output terminal 103 is connected to the positive power source V+ through a pull-up resistor R5.

When the PNP transistor Q1 and the NPN transistor Q2 are both in an OFF state (idle state), the logical level of the noninverting output terminal 103 is held at a HIGH level by means of the pull-up resistor R5.

The other output circuit 107 is substantially the same as the one described above except that the output terminal 104 is connected to the ground side through a resistor R10 and that there is no inverter inserted between the base inputs of Q5 and Q6 and the data input terminal 102.

Now, operation of the prior art transmitting apparatus 101 will be described.

One output terminal 106 is adapted such that the base currents of the PNP transistor Q1 and the NPN transistor Q2 are controlled in accordance with the output of the inverter 105 and either of the transistors Q1 and Q2 is turned on.

When the logical level of transmitted data supplied to the data input terminal 102 is HIGH, the output of the inverter 105 is brought to a LOW level. When the output of the inverter 105 is LOW, then, since no base current is supplied to the NPN transistor Q2, the NPN transistor Q2 is brought to an OFF state. Meanwhile, a base current is supplied to the PNP transistor Q1 through the base resistor R1 and the PNP transistor Q1 is brought to an ON state. Thereby, the output of the noninverting output terminal 103 is brought to a HIGH level.

When the logical level of the transmitted data supplied to the data input terminal 102 is LOW, the output of the inverter 105 is brought to a HIGH level. When the output of the inverter 105 is HIGH, a base current is supplied to the NPN transistor Q2 through the base resistor R3 and the NPN transistor Q2 is brought to an ON state and, at the same time, the PNP transistor Q1 is brought to an OFF state. Thereby, the output of the noninverting output terminal 103 is brought to a LOW level.

In a bipolar transistor such as a PNP transistor and an NPN transistor, even when the supply of the base current is cut off, a time delay is produced until the collector current is cut off by the effect of electric charge stored in the base region and the like.

In order to shorten the cut-off delay time (turn-off time), it is practiced in the prior art transmitting apparatus 101 to connect a field effect transistor between the base and the emitter of each transistor and, by turning on the field effect transistor, to short-circuit the base with the emitter through a low impedance, so that the charge on the base is forcedly discharged.

By getting the charge stored on the base forcedly discharged, the cut-off delay time (turn off time) can be shortened.

The operation will be described. When the logical level of the transmitted data supplied to the data input terminal 102 is HIGH, then the P-channel enhancement field effect transistor Q3 is in an OFF state and the PNP transistor Q1 is brought to an ON state by the LOW level output of the inverter 105.

When the logical level of the transmitted data supplied to the data input terminal 102 is changed from HIGH level to LOW level, the P-channel enhancement field effect transistor Q3 is brought to an ON state.

By the turning on of the P-channel enhancement field effect transistor Q3, the charge stored on the base of the PNP transistor Q1 is forcedly discharged. Thereby, the cut-off delay time (turn off time) of the PNP transistor Q1 is shortened.

On the other hand, when the logical level of the transmitted data supplied to the data input terminal 102 is LOW, then the N-channel enhancement field effect transistor Q4 is in an OFF state and the NPN transistor Q2 is brought to an ON state by the HIGH level output of the inverter 105.

When the logical level of the transmitted data supplied to the data input terminal 102 is changed from LOW level to HIGH level, the N-channel enhancement field effect transistor Q4 is brought to an ON state.

By the turning on of the N-channel enhancement field effect transistor Q4, the charge stored on the base of the NPN transistor Q2 is forcedly discharged. Thereby, the cut-off delay time (turn off time) of the NPN transistor Q2 is shortened.

Since the prior art transmitting apparatus 101 shown in FIG. 6 is employing field effect transistors for shortening the cut-off delay time (turn off time) of the bipolar transistors, the number of parts of the discrete components constituting each of the output circuits 106 and 107 increases.

Therefore, it is considered to provide the circuits for shortening the cut-off delay time (turn off time) of the bipolar transistors in the form of an IC by employing three status buffers.

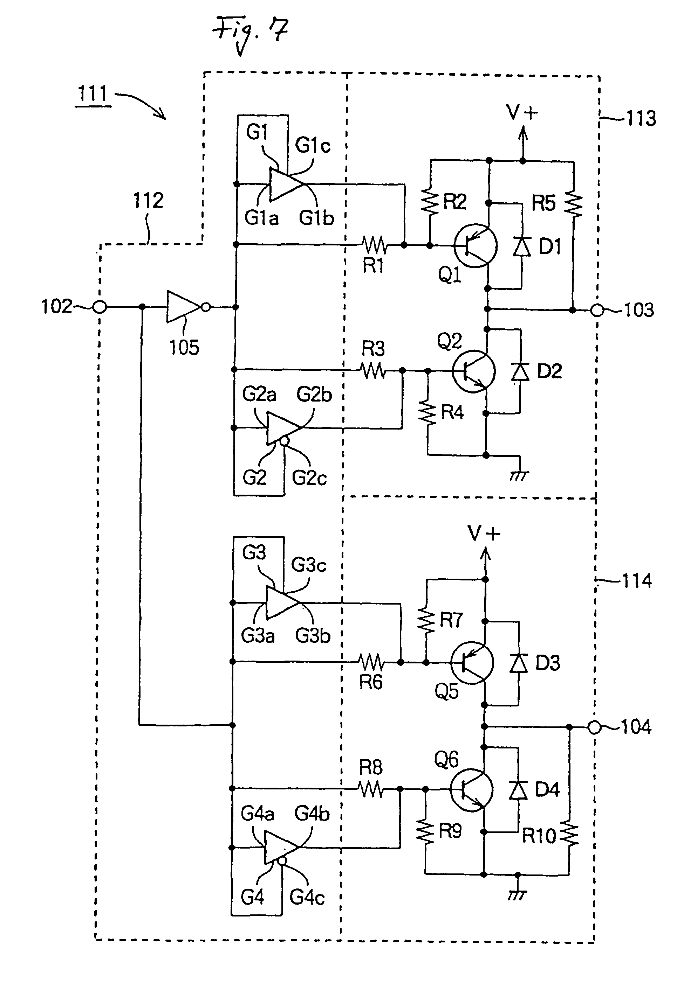

FIG. 7 is a circuit configuration diagram of a transmitting apparatus adapted to shorten the cut-off delay time (turn off time) of bipolar transistors by the use of three status buffers. The transmitting apparatus 111 shown in FIG. 7 comprises a logical circuit portion 112 and two sets of output circuits 113 and 114. The logical circuit portion 112 can be provided in the form of an IC with the logical circuit portions put together.

Each of the output circuits 113 and 114 is provided by eliminating the field effect transistors from each of the output circuits 106 and 107 shown in FIG. 6 and, otherwise, the circuit configuration is the same as that shown in FIG. 6.

The logical circuit portion 112 comprises an inverter 105 and four three status buffers G1 - G4. The input terminal G1a of the first three status buffer G1 is connected to the output terminal of the inverter 105.

The output terminal G1b of the first three status buffer G1 is connected to the base of the PNP transistor Q1.

The output enable terminal G1c of the first three status buffer G1 is connected to the output terminal of the inverter 105.

The first three status buffer G1, when the logical level of the output enable signal supplied to the output enable terminal G1c is LOW, brings the output terminal G1b to a high-impedance state and, when the logical level of the output enable signal supplied to the output enable terminal G1c is HIGH, it outputs a signal at the same logical level as the logical level of the input signal supplied to the input terminal G1a.

As the first three status buffer G1 such a one, of which the output impedance is sufficiently smaller than the resistance value of the base-emitter resistor R2 of the PNP transistor Q1, is employed.

With respect to the first three status buffer G1, operation will be briefly described. When the logical level of the transmitted data supplied to the data input terminal 102 is HIGH, then the output of the inverter 105 is brought to a LOW level and the output enable terminal G1c of the first three status buffer G1 is brought to an LOW level. Hence, the output of the first three status buffer G1 is brought to a high-impedance state.

By the low-level output of the inverter 105, a base current is supplied to the PNP transistor Q1 through the base resistor R1 and, thereby, the PNP transistor Q1 is brought to an ON state and the output of the noninverting output terminal 103 is brought to a HIGH level.

When the logical level of the transmitted data supplied to the data input terminal 102 is changed from a HIGH level to a LOW level, the output of the inverter 105 is changed from a LOW level to a HIGH level and both the output enable terminal G1c and the input terminal G1a of the first three status buffer G1 are brought to a HIGH level and, hence, the output of the first three status buffer G1 is brought to a HIGH level.

Thereby, the base of the PNP transistor Q1 is brought to such a state that it is connected to the side of the positive power source V+ by a low impedance through the high-level outputting transistor within the first three status buffer G1. Thus, it becomes possible to discharge the charge stored on the base of the PNP transistor Q1 by force and shorten the cut-off delay time (turn off time).

As shown in FIG. 6 and FIG. 7, when such a circuit configuration capable of short-circuiting the base and the emitter of a bipolar transistor by a low impedance is employed for shortening the turn off time of the bipolar transistor driving the output terminal, four signal lines are required to be placed between each output circuit and the logical circuit portion and, thus, the interface between the logical circuit portion and each output circuit becomes complicated.

Further, when it is attempted to fabricate the logical circuit portion in an IC, the number of output pins is undesirably increased.

When such a circuit configuration is employed in which a field effect transistor is used in place of the bipolar transistor, the turn off time can be shortened by supplying, through a low impedance, the gate of the field effect transistor with a voltage for controlling the field effect transistor to be turned into an OFF state. However, there arises a problem similar to the above that the interface between the logical circuit portion and each output circuit becomes complicated.

The present invention was made to solve the above described problems and it is an object of the invention to provide a transmitting apparatus capable of shortening the turn off time of the output transistor with the use of a simple circuit configuration.

According to the invention described above, there is provided a transmitting apparatus including: a transmitting circuit alternatively generating a high-level signal and a low-level signal and transmitting the generated signal over a communication line; a control circuit for providing a control signal for controlling said transmitting circuit; a first transistor for activating said communication line to a HIGH level when said control signal is at a first level; and a second transistor for activating said communication line to a LOW level when said control signal is at a second level; wherein the potential of the low-level signal is inputted to the input terminal of said first transistor through a resistor, and the potential of the high-level signal is inputted to the input terminal of said second transistor through a resistor; and wherein said control circuit connected to the input terminals of said transistors, develops a high-impedance state with respect to the input terminal of said first transistor and outputs a low-level signal to the input terminal of said second transistor when a high-level signal is to be transmitted to the communication line, and outputs a high-level signal to the input terminal of said first transistor and develops a high-impedance state with respect to the input terminal of said second transistor when a low-level signal is to be transmitted to the communication line.

The control circuit may be made up of three status buffers. The outputting of the low-level signal, the outputting of the high-level signal, and the development of high-impedance state can be performed by the three status buffers.

The first and second transistors may be provided by bipolar transistors and the bases may be used as the inputs. The bipolar transistors can be controlled with their bases used as the inputs (input terminals).

The first and second transistors may be provided by field effect transistors and the gates may be used as the inputs. The field effect transistors can be controlled with their gates used as the inputs (input terminals).

An embodiment of the invention will be described with reference to the accompanying drawings.
FIG. 1 is a circuit configuration diagram of a transmitting apparatus according to the invention.
FIG. 2 is a timing chart showing operation of the transmitting apparatus shown in FIG. 1.
FIG. 3 is a circuit configuration diagram of a transmitting apparatus provided with a transmission stopping function.
FIG. 4 is a circuit configuration diagram of a transmitting apparatus provided with a transmission stopping function and a base drive inhibiting function.
FIG. 5 is a circuit configuration diagram showing an example of variation of the transmitting apparatus shown in FIG. 1.
FIG. 6 is a circuit configuration diagram showing an example of a prior art transmitting apparatus.
FIG. 7 is a circuit configuration diagram of a transmitting apparatus in which a design for shortening the turn off time of transistors is made by employing three status buffers.

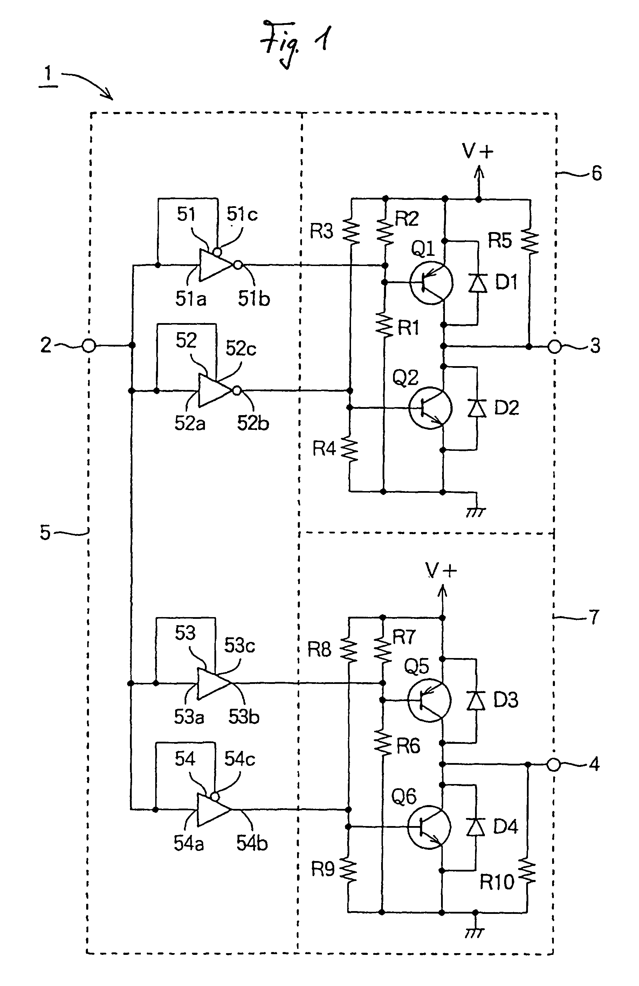

FIG. 1 is a circuit configuration diagram of the transmitting apparatus according to the invention.

The transmitting apparatus 1 shown in FIG. 1 includes a noninverting output terminal 3 for outputting the same logical level as the logical level of the transmitted data supplied to the data input terminal 2 and an inverting output terminal 4 for outputting the logical level obtained by reversing the logical level of the transmitted data supplied to the data input terminal 2. The transmitting apparatus 1 comprises a logical circuit portion 5 and two sets of output circuits 6 and 7.

One output circuit 6 is made up of a PNP transistor Q1, an NPN transistor Q2, and their peripheral circuits.

The emitter of the PNP transistor Q1 is connected to the positive power source V+ and the collector of the PNP transistor Q1 is connected to the noninverting output terminal 3.

The base of the PNP transistor Q1 is connected to ground (or a negative power source) through a base resistor R1. The resistance value of the base resistor R1 is so set that it can supply a base current sufficient to control the PNP transistor Q1 turning on.

A base-emitter resistor R2 is connected in parallel with the base-emitter circuit of the PNP transistor Q1. Incidentally, the base-emitter resistor R2 may be dispensed with.

There is provided a diode D1 between the collector and the emitter of the PNP transistor Q1 for protecting the PNP transistor Q1 against the backward voltage and backward current.

As for the diode D1, the cathode of the diode D1 is connected to the emitter side of the PNP transistor Q1 and the anode of the diode D1 is connected to the collector side of the PNP transistor Q1.

The emitter of the NPN transistor Q2 is connected to ground (or a negative power source) and the collector of the NPN transistor Q2 is connected to the noninverting output terminal 3.

The base of the NPN transistor Q2 is connected to the positive power source V+ through a base resistor R3. The resistance value of the base resistor R3 is so set that it can supply a base current sufficient to control the NPN transistor Q2 turning on.

A base-emitter resistor R4 is connected in parallel with the base-emitter circuit of the NPN transistor Q2. Incidentally, the base-emitter resistor R4 may be dispensed with.

There is provided a diode D2 between the collector and the emitter of the NPN transistor Q2 for protecting the NPN transistor Q2 against the backward voltage and backward current.

As for the diode D2, the cathode of the diode D2 is connected to the collector side of the NPN transistor Q2 and the anode of the diode D2 is connected to the emitter side of the NPN transistor Q2.

The noninverting output terminal 3 is connected to the positive power source V+ through a pull-up resistor R5.

The other output circuit 7 is made up of a PNP transistor Q5, an NPN transistor Q6, and their peripheral circuits.

The emitter of the PNP transistor Q5 is connected to the positive power source V+ and the collector of the PNP transistor Q5 is connected to the inverting output terminal 4.

The base of the PNP transistor Q5 is connected to ground (or a negative power source) through a base resistor R6. The resistance value of the base resistor R6 is so set that it can supply a base current sufficient to control the PNP transistor Q5 turning on.

A base-emitter resistor R7 is connected in parallel with the base-emitter circuit of the PNP transistor Q5. Incidentally, the base-emitter resistor R7 may be dispensed with.

There is provided a diode D3 between the collector and the emitter of the PNP transistor Q5 for protecting the PNP transistor Q5 against the backward voltage and backward current.

As for the diode D3, the cathode of the diode D3 is connected to the emitter side of the PNP transistor Q5 and the anode of the diode D3 is connected to the collector side of the PNP transistor Q5.

The emitter of the NPN transistor Q6 is connected to ground (or a negative power source) and the collector of the NPN transistor Q6 is connected to the inverting output terminal 4.

The base of the NPN transistor Q6 is connected to the positive power source V+ through a base resistor R8. The resistance value of the base resistor R8 is so set that it can supply a base current sufficient to control the NPN transistor Q6 turning on.

A base-emitter resistor R9 is connected in parallel with the base-emitter circuit of the NPN transistor Q6. Incidentally, the base-emitter resistor R9 may be dispensed with.

There is provided a diode D4 between the collector and the emitter of the NPN transistor Q6 for protecting the NPN transistor Q6 against the backward voltage and backward current.

As for the diode D4, the cathode of the diode D4 is connected to the collector side of the NPN transistor Q6 and the anode of the diode D4 is connected to the emitter side of the NPN transistor Q6.

The inverting output terminal 4 is connected to ground (or a negative power source) through a pull-down resistor R10.

When the PNP transistor Q5 and the NPN transistor Q6 are both in an OFF state (idle state), the logical level of the inverting output terminal 4 is held at a LOW level by means of the pull-down resistor R10.

The logical circuit portion 5 is made up of four three status buffers 51, 52, 53, and 54.

The input terminal 51a of the first three status buffer 51 is connected to the data input terminal 2.

The output terminal 51b of the first three status buffer 51 is connected to the base of the PNP transistor Q1.

The output enable terminal 51c of the first three status buffer 51 is connected to the data input terminal 2.

When the logical level of the output enable signal supplied to the output enable terminal 51c is HIGH, the first three status buffer 51 brings its output terminal 51b to a high-impedance state and, when the logical level of the output enable signal supplied to the output enable terminal 51c is LOW, it outputs a signal at the logical level obtained by reversing the logical level of the input signal supplied to the input terminal 51a.

As the first three status buffer 51, such a one is used that outputs, as the high level output, the voltage of the positive power source V+ through a low impedance.

The input terminal 52a of the second three status buffer 52 is connected to the data input terminal 2.

The output terminal 52b of the second three status buffer 52 is connected to the base of the NPN transistor Q2.

The output enable terminal 52c of the second three status buffer 52 is connected to the data input terminal 2.

When the logical level of the output enable signal supplied to the output enable terminal 52c is LOW, the second three status buffer 52 brings its output terminal 52b to a high-impedance state and, when the logical level of the output enable signal supplied to the output enable terminal 52c is HIGH, it outputs a signal at the logical level obtained by reversing the logical level of the input signal supplied to the input terminal 52a.

As the second three status buffer 52, such a one is used that outputs, as the low level output, the voltage of ground (or a negative power source) through a low impedance.

The input terminal 53a of a third three status buffer 53 is connected to the data input terminal 2.

The output terminal 53b of the third three status buffer 53 is connected to the base of the PNP transistor Q5.

The output enable terminal 53c of the third three status buffer 53 is connected to the data input terminal 2.

When the logical level of the output enable signal supplied to the output enable terminal 53c is LOW, the third three status buffer 53 brings its output terminal 53b to a high-impedance state and, when the logical level of the output enable signal supplied to the output enable terminal 53c is HIGH, it outputs a signal at the logical level being the same as the logical level of the input signal supplied to the input terminal 53a.

As the third three status buffer 53 is such a one is used that outputs, as the high level output, the voltage of the positive power source V+ at a low impedance.

The input terminal 54a of a fourth three status buffer 54 is connected to the data input terminal 2.

The output terminal 54b of the fourth three status buffer 54 is connected to the base of the NPN transistor Q6.

The output enable terminal 54c of the fourth three status buffer 54 is connected to the data input terminal 2.

When the logical level of the output enable signal supplied to the output enable terminal 54c is HIGH, the fourth three status buffer 54 brings its output terminal 54b to a high-impedance state and, when the logical level of the output enable signal supplied to the output enable terminal 54c is LOW, it outputs a signal at the logical level being the same as the logical level of the input signal supplied to the input terminal 54a.

As the fourth three status buffer 54, such a one is used that outputs, as the low level output, the voltage of ground (or a negative power source) through a low impedance.

Now, operation of the transmitting apparatus 1 shown in FIG. 1 will be described.

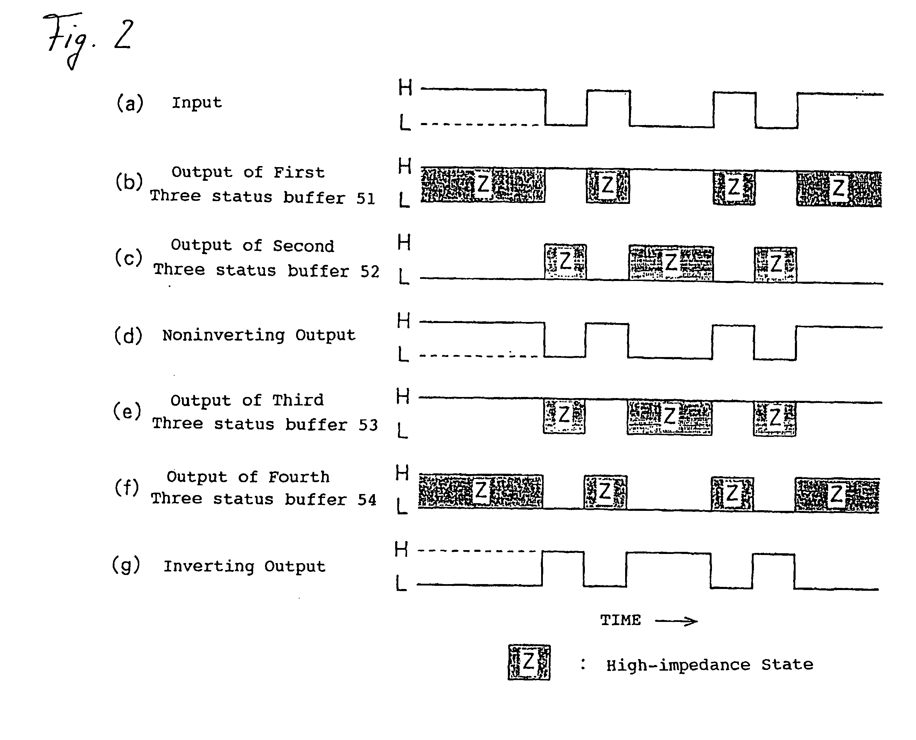

FIG. 2 is a timing chart showing the operation of the transmitting apparatus shown in FIG. 1.

When the transmitted data supplied to the data input terminal 2 (the input shown in FIG. 2A) is at a HIGH level, then the output of the first three status buffer 51 is brought to a high-impedance state as shown in FIG. 2B and the output of the second three status buffer 52 is brought to a LOW level as shown in FIG. 2C.

Accordingly, a base current is supplied to the PNP transistor Q1 through the base resistor R1, whereby the PNP transistor Q1 is brought to an ON state, and the NPN transistor Q2 is brought to an OFF state. Hence, the output of the noninverting output terminal 3 is brought to a HIGH level as shown in FIG. 2D.

When the transmitted data supplied to the data input terminal 2 is brought to a LOW level, the output of the first three status buffer 51 is brought to a HIGH level as shown in FIG. 2B and the output of the second three status buffer 52 is brought to a high-impedance state as shown in FIG. 2C.

Accordingly, the PNP transistor Q1 is brought to an OFF state and a base current is supplied to the NPN transistor Q2 through the base resistor R3, whereby the NPN transistor Q2 is brought to an ON state. Hence, the output of the noninverting output terminal 3 is brought to a LOW level as shown in FIG. 2D.

When the transmitted data supplied to the data input terminal 2 (the input shown in FIG. 2A) is at a HIGH level, then the output of the third three status buffer 53 is brought to a HIGH level as shown in FIG. 2E and the output of the fourth three status buffer 54 is brought to a high-impedance state as shown in FIG. 2F.

Accordingly, the PNP transistor Q5 is brought to an OFF state and a base current is supplied to the NPN transistor Q6 through the base resistor R8, whereby the NPN transistor Q6 is brought to an ON state. Hence, the output of the inverting output terminal 4 is brought to a LOW level as shown in FIG. 2G.

When the transmitted data supplied to the data input terminal 2 is brought to a LOW level, the output of the third three status buffer 53 is brought to a high-impedance state as shown in FIG. 2E and the output of the fourth three status buffer 54 is brought to a LOW level as shown in FIG. 2F.

Accordingly, a base current is supplied to the PNP transistor Q5 through the base resistor R6, whereby the PNP transistor Q5 is brought to an ON state, and the NPN transistor Q6 is brought to an OFF state. Hence, the output of the inverting output terminal 4 is brought to a HIGH level as shown in FIG. 2G.

In the transmitting apparatus 1 shown in FIG. 1, it is adapted such that a base bias circuit is provided for holding the PNP transistor Q1, Q5 in an ON state and, when the PNP transistor Q1, Q5 is to be turned off, the voltage of the positive power source V+ is supplied from the three status buffer 51, 53 to the base of the PNP transistor Q1, Q5 at a low impedance. Accordingly, it is made possible to control the PNP transistor Q1, Q5 turning off with the use of a single signal line. Further, by the supply of the voltage of the positive power source V+ to the base of the PNP transistor Q1, Q5 at a low impedance, the charge on the base of the PNP transistor Q1, Q5 can be quickly discharged and, hence, the turn off time of the PNP transistor Q1, Q5 can be shortened.

Likewise, it is adapted such that a base bias circuit is provided for holding the NPN transistor Q1, Q5 in an ON state and, when the PNP transistor Q1, Q5 is to be turned off, the voltage of ground (or a negative power source) is supplied from the three status buffer 52, 54 to the base of the NPN transistor Q2, Q6 through a low impedance. Accordingly, it is made possible to control the NPN transistor Q2, Q6 turning off with the use of a single signal line. Further, by the supply of the voltage of ground (or a negative power source) to the base of the NPN transistor Q2, Q6 at a low impedance, the charge on the base of the NPN transistor Q2, Q6 can be quickly discharged and, hence, the turn off time of the NPN transistor Q2, Q6 can be shortened.

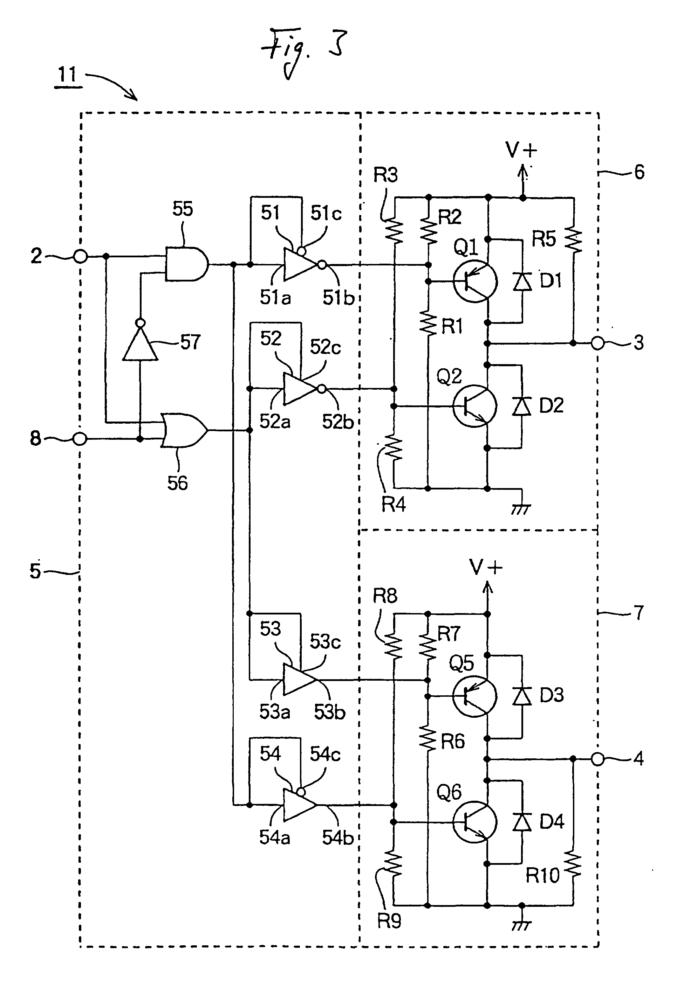

FIG. 3 is a circuit configuration diagram of a transmitting apparatus provided with a transmission stopping function.

The transmitting apparatus 11 shown in FIG. 3 is provided by adding, to the transmitting apparatus 1 shown in FIG. 1, a transmission stopping signal input terminal 8, as well as an AND gate 55, an OR gate 56, and an inverter 57, by which all of the transistors Q1, Q2, Q5 and Q6 are controlled to turn off in accordance with a transmission stopping signal (idle signal) supplied to a transmission stopping signal input terminal 8.

In the transmitting apparatus 11, it is adapted such that, when an input signal at a High level is inputted to the transmission stopping signal input terminal 8, all the transistors Q1, Q2, Q5, and Q6 are controlled to turn off and, when the input signal at LOW level is inputted to the transmission stopping signal input terminal 8, an output corresponding to the logical level of the transmitted data supplied to the data input terminal 2 is generated.

In the transmission stopped state, the logical level of the noninverting output terminal 3 is held at a HIGH level through the pull-up resistor R5 and the logical level of the inverting output terminal 4 is held at a LOW level through the pull-down resistor R10.

Since all the transistors Q1, Q2, Q5, and Q6 are turned off in the transmission stopped state, current consumption at the time of stand by and the like can be suppressed.

When an input signal at High level is inputted to the transmission stopping signal input terminal 8, one input signal to the AND gate 55 is brought to a LOW level through the inverter 57 and the output signal from the AND gate 55 is brought to a LOW level. The output signal from the AND gate 55 is supplied to the first three status buffer 51 and the fourth three status buffer 54. Since the output signal from the AND gate 55 is brought to a LOW level, the output signal from the terminal 51b of the first three status buffer 51 is brought to a HIGH level and, by this High level output, the PNP transistor Q1 is brought to an OFF state. Further, since the output signal from the AND gate 55 is brought to a LOW level, the output signal from terminal of the fourth three status buffer 54 is brought to a LOW level and, by this LOW level output, the NPN transistor Q6 is brought to an OFF state.

When the input signal at High level is inputted to the transmission stopping signal input terminal 8, this HIGH level signal is supplied to the second three status buffer 52 and the third three status buffer 53 through the OR gate 56. Since the output signal from the OR gate 56 is brought to a HIGH level, the output terminal 52b of the second three status buffer 52 is brought to a LOW level, and, by this LOW level output, the NPN transistor Q2 is brought to an OFF state. Since the output signal from the OR gate 56 is brought to a HIGH level, the output signal from the terminal 53b of the third three status buffer 53 is brought to a HIGH level, and, by this HIGH level output, the PNP transistor Q5 is brought to an OFF state.

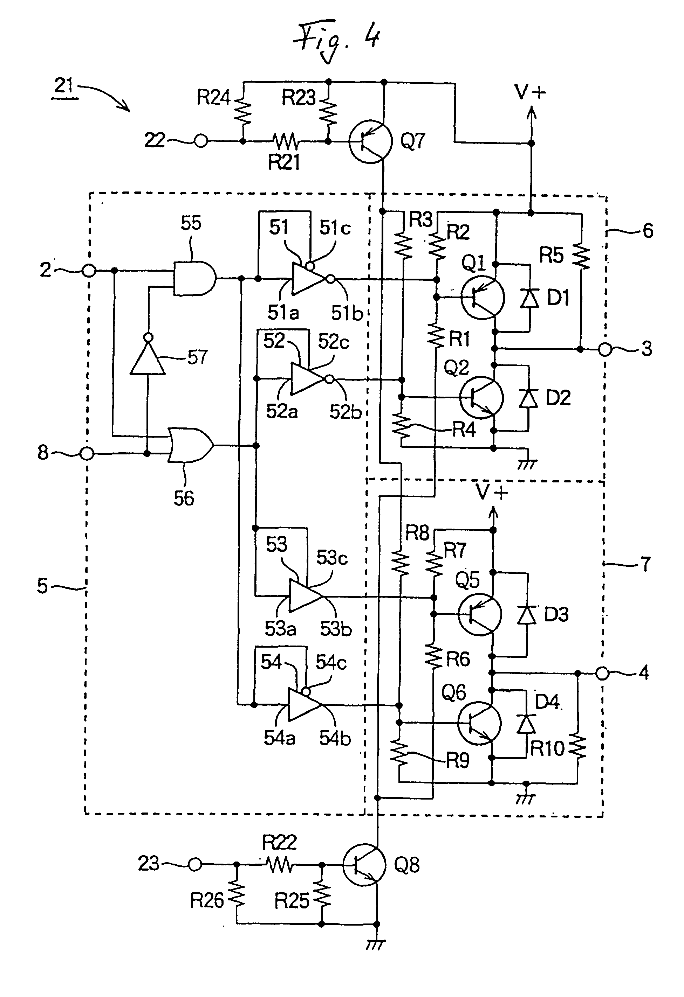

FIG. 4 is a circuit configuration diagram of a transmitting apparatus provided with a base drive inhibiting function in addition to the transmission stopping function.

The transmitting apparatus 21 shown in FIG. 4 is provided by adding, to the transmitting apparatus 11 shown in FIG. 3, a PNP transistor Q7 for controlling the supply of base currents to the NPN transistors Q2 and Q6, an NPN transistor Q8 for controlling the supply of base currents to the PNP transistors Q1 and Q5, and peripheral circuits to these transistors Q7 and Q8.

In the transmitting apparatus shown in FIG. 1 and FIG. 3, if the operation of the logical circuit portion 5 becomes unstable at the rise of the power source and all the outputs of the three status buffers 51 - 54 are brought to high-impedance states, there is the possibility of all the transistors Q1, Q2, Q5, and Q6 turning on and short-circuiting the power source. In the transmitting apparatus 21 shown in FIG. 4, it is adapted such that the source voltage's reaching a predetermined voltage is detected by a voltage detecting circuit or the like, not shown, a first bias supply control terminal 22 is brought to a LOW level in accordance with the detected output of the source voltage, and a base current is supplied, through a base resistor R21, to the PNP transistor Q7 whose emitter is connected to the positive power source V+ to turn the PNP transistor Q7 ON, whereby bias voltages are supplied to the outputting NPN transistors Q2 and Q6.

Further, it is adapted such that the source voltage's reaching a predetermined voltage is detected by a voltage detecting circuit or the like (not shown), a signal at HIGH level is inputted to a second bias supply control terminal 23 in accordance with the detected output of the source voltage, and a base current is supplied, through a base resistor R22, to the NPN transistor Q8 whose emitter is connected to ground (or a negative power source) to turn the NPN transistor Q8 ON, whereby bias voltages are supplied to the outputting PNP transistors Q1 and Q5.

When both the PNP transistor Q7 and the NPN transistor Q8 are in OFF states, no bias voltage is supplied to each of the transistors Q1, Q2, Q5, and Q6, and therefore, all the outputting transistors Q1, Q2, Q5, and Q6 can be brought to OFF states regardless of the outputting state of each of the three status buffers 51 - 54.

Reference numeral R23 denotes a base-emitter resistor for the PNP transistor Q7 and R24 denotes a pull-up resistor for the first bias supply control terminal 22. The configuration may be modified such that only the resistor R23 or the resistor R24 is provided therein.

Reference numeral R25 denotes a base-emitter resistor for the NPN transistor Q8 and R26 denotes a pull-down resistor for the second bias supply control terminal 23. The configuration may be modified such that only the resistor R25 or the resistor R26 is provided therein.

Further, it is also possible to provide such a configuration that a constant-voltage circuit constituted of a voltage regulating diode or the like, not shown, is interposed between the first bias supply control terminal 22 and the second bias supply control terminal 23 and that base currents are supplied to the PNP transistor Q7 and the NPN transistor Q8 when the power source V+ exceeds the regulated voltage determined by the constant-voltage circuit, the transistors Q7 and Q8 are brought to ON states, and bias voltages are supplied to the outputting transistors Q1, Q2, Q5, and Q6. In this case, the pull-up resistor R24 and the pull-down resistor R26 may be eliminated.

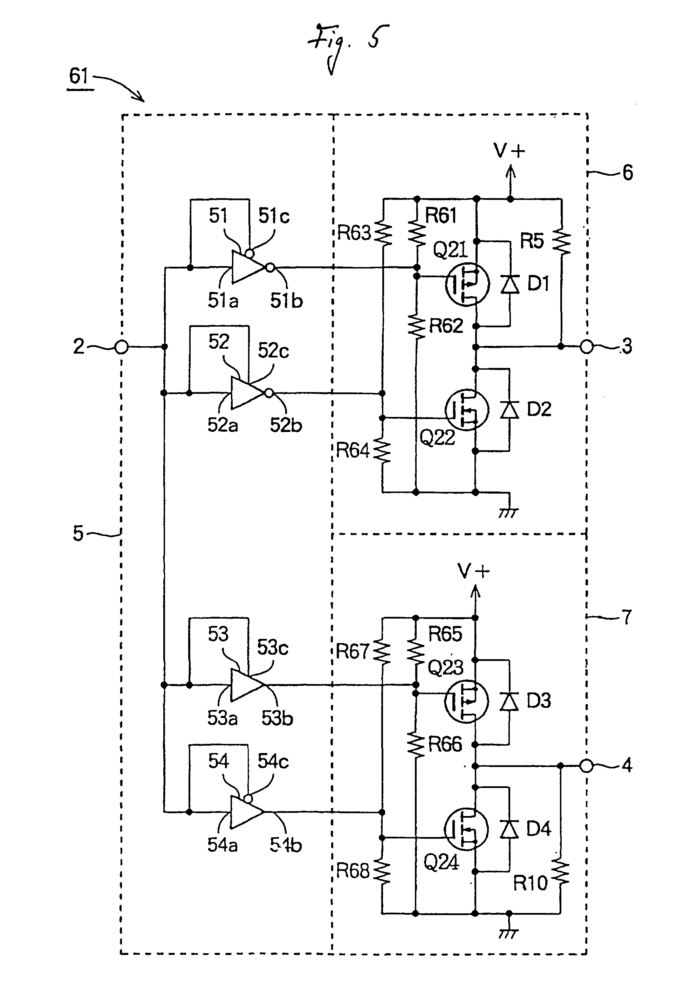

FIG. 5 is a circuit configuration diagram of an example of variation of the transmitting apparatus shown in FIG. 1.

The transmitting apparatus 61 shown in FIG. 5 is of such a configuration that P-channel enhancement field effect transistors Q21 and Q23 are used in place of the outputting PNP transistors Q1 and Q5 shown in FIG. 1 and N-channel enhancement field effect transistors Q22 and Q24 are used in place of the outputting NPN transistors Q2 and Q6 shown in FIG. 1.

The gate voltage necessary for controlling the outputting P-channel enhancement field effect transistor Q21 turning on is generated by voltage-dividing the source voltage by a resistor 61 and a resistor 62. The voltage generated by the voltage division by the resistor 61 and the resistor 62 is supplied to the gate of the outputting P-channel enhancement field effect transistor Q21.

The gate voltage necessary for controlling the outputting N-channel enhancement field effect transistor Q22 turning on is generated by voltage-dividing the source voltage by a resistor 63 and a resistor 64. The voltage generated by the voltage division by the resistor 63 and the resistor 64 is supplied to the gate of the outputting N-channel enhancement field effect transistor Q22.

The gate voltage necessary for controlling the outputting P-channel enhancement field effect transistor Q23 turning on is generated by voltage-dividing the source voltage by a resistor 65 and a resistor 66. The voltage generated by the voltage division by the resistor 65 and the resistor 66 is supplied to the gate of the outputting P-channel enhancement field effect transistor Q23.

The gate voltage necessary for controlling the outputting N-channel enhancement field effect transistor Q24 turning on is generated by voltage-dividing the source voltage by a resistor 67 and a resistor 68. The voltage generated by the voltage division by the resistor 67 and the resistor 68 is supplied to the gate of the outputting N-channel enhancement field effect transistor Q24.

When controlling each of the field effect transistors Q21 - Q24 turning from ON state to OFF state, the turn off time of each field effect transistor Q21 - Q24 can be shortened by supplying, through a low impedance, the voltage for turning off each field effect transistor Q21 - Q24 to the gate of each field effect transistor Q21 - Q24.

Further, such a configuration may be provided in which, as shown in FIG. 5, the gate voltage for bringing each field effect transistor Q21 - Q24 to an OFF state is supplied via each three status buffer 51 - 54 through a low impedance.

As described above, the transmitting apparatus according to the invention is configured such that the base or gate of a transistor driven in an ON state is supplied with a voltage to control the transistor turning off through a three status buffer. Hence, the switching operation of transistors can be controlled by having each transistor interfaced with a single signal line.

Further, since it is configured such that the voltage for controlling the transistor turning off is output from the three status buffer through a low impedance, the turn off time of the transistor can be shortened and a signal changing between high level and low level can be transmitted fast.

## Claims

1. A transmitting apparatus comprising:
a transmitting circuit (1) alternatively generating a high-level signal and a low-level signal and transmitting the generated signal over a communication line, said transmitting circuit comprising:
a control circuit (51,52) for providing a control signal within said transmitting circuit;
a first transistor (Q1) for activating said communication line to a HIGH level when said control signal is at a first level; and
a second transistor (Q2) for activating said communication line to a LOW level when said control signal is at a second level;
wherein the potential of the low-level signal is inputted to the input terminal of said first transistor through a resistor (R1), and
the potential of the high-level signal is inputted to the input terminal of said second transistor through a resistor (R3), and
wherein said control circuit connected to the input terminals of said transistors,
develops a high-impedance state with respect to the input terminal of said first transistor and outputs a low-level signal to the input terminal of said second transistor when a high-level signal is to be transmitted to the communication line, and
outputs a high-level signal to the input terminal of said first transistor and develops a high-impedance state with respect to the input terminal of said second transistor when a low-level signal is to be transmitted to the communication line.

2. A transmitting apparatus according to claim 1, wherein said control circuit is made up of three status buffers.

3. A transmitting apparatus according to claim 2, wherein said first and second transistors are made up of bipolar transistors and said inputs are the bases.

4. A transmitting apparatus according to claim 2, wherein said first and second transistors are made up of field effect transistors and said inputs are the gates.

## Patentansprüche

1. Sendevorrichtung, umfassend:
eine Sendeschaltung (1), die alternativ ein Hochpegelsignal und ein Niedrigpegelsignal erzeugt und das erzeugte Signal über eine Kommunikationsleitung sendet, wobei die Sendeschaltung umfasst:
eine Steuerschaltung (51, 52) zum Bereitstellen eines Steuersignals innerhalb der Sendeschaltung;
einen ersten Transistor (Q1) zum Aktivieren der Kommunikationsleitung auf einen Hochpegel, wenn das Steuersignal einen ersten Pegel aufweist; und
einen zweiten Transistor (Q2) zum Aktivieren der Kommunikationsleitung auf einen Niedrigpegel, wenn das Steuersignal einen zweiten Pegel aufweist;
wobei das Potential des Niedrigpegelsignals über einen Widerstand (R1) in den Eingangsanschluss des ersten Transistors eingegeben wird, und
das Potential des Hochpegelsignals über einen Widerstand (R3) in den Eingangsanschluss des zweiten Transistors eingegeben wird, und
die mit den Eingangsanschlüssen der Transistoren verbundene Steuerschaltung
einen Hochimpedanzzustand bezüglich des Eingangsanschlusses des ersten Transistors entwickelt und ein Niedrigpegelsignal an den Eingangsanschluss des zweiten Transistors ausgibt, wenn ein Hochpegelsignal auf die Kommunikationsleitung zu senden ist, und
ein Hochpegelsignal an den Eingangsanschluss des ersten Transistors ausgibt und einem Hochimpedanzzustand bezüglich des Eingangsanschlusses des zweiten Transistors entwickelt, wenn ein Niedrigpegelsignal auf die Kommunikationsleitung auszugeben ist.

2. Sendevorrichtung nach Anspruch 1, bei der die Steuerschaltung Drei-Zustand-Puffer umfasst.

3. Sendeschaltung nach Anspruch 2, bei der die ersten und zweiten Transistoren von Bipolartransistoren gebildet werden und die Eingänge die Basen sind.

4. Sendevorrichtung nach Anspruch 2, bei der die ersten und zweiten Transistoren von Feldeffekttransistoren gebildet werden und die Eingänge die Gates sind.

## Revendications

1. Appareil de transmission comprenant :
un circuit de transmission (1) générant alternativement un signal de niveau haut et un signal de niveau bas et transmettant le signal généré sur une 5ligne de communication, ledit circuit de transmission comprenant :
un circuit de commande (51, 52) pour délivrer un signal de commande dans ledit circuit de transmission ;
un premier transistor (Q1) pour activer ladite 10ligne de communication à un niveau HAUT lorsque ledit signal de commande est à un premier niveau ; et
un second transistor (Q2) pour activer ladite ligne de communication à un niveau BAS lorsque ledit signal de commande est à un second niveau ;
15 dans lequel le potentiel du signal de niveau bas est entré dans la borne d'entrée dudit premier transistor par l'intermédiaire d'une résistance (R1) ; et
le potentiel du signal de niveau haut est entré 20dans la borne d'entrée dudit second transistor par l'intermédiaire d'une résistance (R3) ; et
dans lequel ledit circuit de commande connecté aux bornes d'entrée desdits transistors,
développe un état de haute impédance par rapport à la borne d'entrée dudit premier transistor et délivre un signal de niveau bas à la borne d'entrée dudit second transistor lorsqu'un signal de niveau haut doit être transmis à la ligne de communication, et
délivre un signal de niveau haut à la borne 30d'entrée dudit premier transistor et développe un état de haute impédance par rapport à la borne d'entrée dudit second transistor lorsqu'un signal de niveau bas doit être transmis à la ligne de communication.

2. Appareil de transmission selon la revendication 1, dans lequel ledit circuit de commande est composé de trois tampons d'états.

3. Appareil de transmission selon la revendication 102, dans lequel lesdits premier et second transistors sont composés de transistors bipolaires et lesdites entrées sont les bases.

4. Appareil de transmission selon la revendication 152, dans lequel lesdits premier et second transistors sont composés de transistors à effet de champ et lesdites entrées sont les grilles.
